# EUROPEAN PATENT SPECIFICATION

(11) **EP 2 931 978 B1**
(45) Date of publication and mention of the grant of the patent: **15.02.2017**
(21) Application number: 12824785.5
(22) Date of filing: 11.12.2012
(51) Int. Cl.: E02B 17/02, E02D 27/52, E02B 17/00, F03D 1/00, F03D 13/20, F03D 13/25

(54) **METHOD AND ASSEMBLY FOR PROVIDING A FOUNDATION STRUCTURE FOR AN ON-WATER INSTALLATION**
VERFAHREN UND ANORDNUNG ZUR BEREITSTELLUNG EINER FUNDAMENTSTRUKTUR FÜR EINE ANLAGE AUF WASSER
PROCÉDÉ ET ENSEMBLE POUR RÉALISER UNE STRUCTURE DE FONDATION POUR UNE INSTALLATION EN MER

(43) Date of publication of application: 21.10.2015
(73) Proprietor: Temporary Works Design B.V., 3115 JD Schiedam (NL)
(72) Inventor: KOPPERT, Pieter Martijn, NL-2694 AT 's-Gravenzande (NL)
(74) Representative: De Vries & Metman
(86) International application number: PCT/NL2012/050874
(87) International publication number: WO 2014/092555

(56) References cited:
- EP-A1- 2 436 593
- DE-A1-102010 020 995
- FR-A1- 2 424 370
- US-A- 3 593 529

## Description

Method for providing a foundation structure for an on-water installation.

The present invention relates to a method for providing a foundation structure for an on-water installation, such as an on-water wind turbine - for example an offshore wind turbine - wherein the foundation structure comprises: a base frame, such as a jacket, for supporting the on-water installation; and at least one pile, each with a lower part and an upper part, the lower parts of the piles being secured to a bed of a water and the upper parts of the piles being secured to the base frame.

Although the invention especially relates to a method for providing a foundation structure for an offshore installation, it will become clear that the method of the invention can also be used in a more general manner for providing a foundation for an installation built on a water. Therefore in relation to the present invention , the term 'on-water' is used. This term means 'on a water'. According to the invention, such a water can be a sea, an ocean, a river, a canal, a waterway, a harbour, a lake, an inland sea, etcetera. In case the water is a sea or an ocean, the term 'on-water' can be replaced by the term 'offshore'.

Referring to prior art of offshore installations, several types of foundation structure and methods of providing a foundation structure are known.

According to US 6,299,385 a mini-jacket is installed using a tubular pipe, called a caisson. This caisson is driven into the ocean floor. The upper end of this caisson, however, extends above the water surface. The mini-jacket has a caisson sleeve and pile sleeves. The mini-jacket is installed onto the caisson by lifting the mini-jacket above the caisson - which has already been driven into the ocean floor- and lowering the caisson so that the caisson sleeve slides over the caisson. Subsequently the mini-jacket is secured to the caisson so that the caisson alone supports the mini-jacket. Next, piles are driven through the pile sleeves of the mini-jacket into the ocean floor and are rigidly connected to the pile sleeves. After the mini-jacket has been installed on the piles and caisson, wells can be drilled through the caisson. Before the piles are driven into the ocean floor, the jacket is supported by only the caisson. This requires the caisson to be strong and robust.

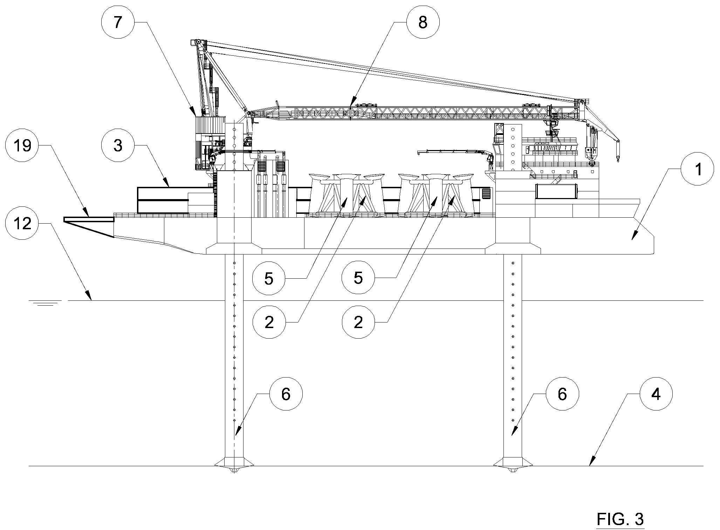

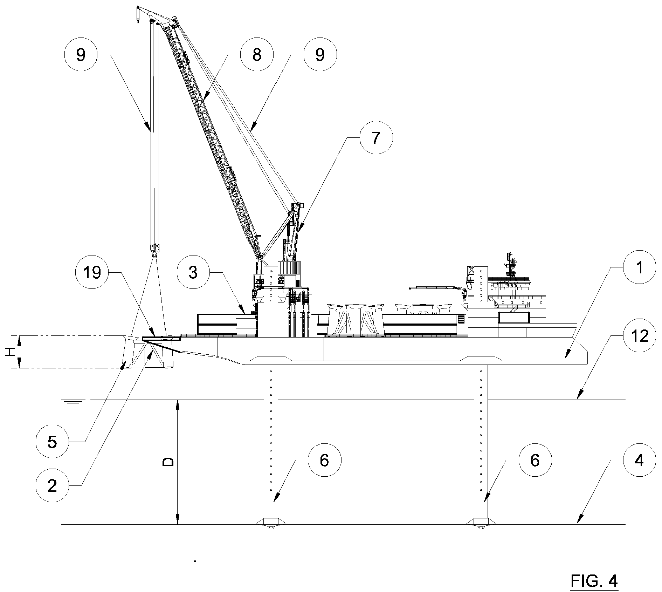

DE-20-2009-006-507 discloses a triangular frame for vertically guiding foundation piles of an offshore wind turbine. The triangular frame has an upper part and a lower part. The upper part caries an upper guide for each pile and the lower part carries a lower guide for each pile. The triangular frame is permanently mounted to a jack-up platform so that it can be moved from a vertical storage position on the platform to a horizontal position for guiding the piles when driving the piles into the floor of the sea. In order to be able to guide the piles when driving them into the floor of the sea, on the one hand, and releasing the piles for removing the triangular frame, each upper and lower guide comprises - see fig. 10a and 10b of DE-20-2009-006-507 - one or two hinged arms which are movable between an open position - I - and a closed position - fig. 10b - in which the arms engage around the piles. After the foundation piles are driven into the floor of the sea, the upper ends will extend above the surface of the water. After releasing and removing the triangular frame from the piles driven into the floor of the sea, a frame according to DE-20-2004-020-720 for carrying a wind turbine can be mounted on top of the upper ends of the piles. This frame has three radial arms. Each arm is at its end, on the lower side provided with a tube member or a stub member which can be slid over or in, respectively, of the upper ends of the piles to provide a tube-in-tube connection with the piles. In order to avoid problems with positioning the frame accurately on top of the piles, the tube members or stub members are dimensioned such that there is a large play between the tube/stub member and the upper ends of the piles, when these are slid into each other. This large play has to be filled with a mortar to obtain a rigid connection between the frame and piles, see fig. 3 and 4 of DE-20-2004-020-720. When placing the frame of DE-20-2004-020-720 on top of the piles driven into the floor of the sea, the jack-up platform with triangular frame according to DE-20-2009-006-507 first has to be moved away from the piles in order to allow sufficient access of the frame to the piles.

FR 2 424 370, US 3,593,529, DE 10 2010 020 995, EP 2 436 593, US 2006/104821 and EP 2 495 370 are also noted.

Document FR 2 424 370 discloses the features of the preamble of claim 1.

The present invention provides a method for providing a foundation structure for an on-water installation, wherein the foundation structure comprises: a base frame and at least three piles each with a lower part and an upper part, the lower parts of the piles being secured to a bed of a water and the upper parts of the piles being secured to the base frame. The object of the invention is to provide such a method which is efficient and can be used with heavy constructions, like large wind turbines.

To that end a method according to the appended claims is provided herewith. The object is according to a first aspect of the invention achieved by providing a method, as defined by claim 1, for providing a foundation structure for an on-water installation, such as an on-water wind turbine, for example an offshore wind turbine.

With the method according to the invention, the base frame for supporting the on-water installation is first used for guiding the piles when piling them into the bed of the water and is subsequently secured to the piles and decoupled form the jack-up rig so that the base frame becomes part of the foundation structure. Thus, after having served as an assist for piling the piles into the bed of the water, the base frame is secured to the piles and left behind on the piles. Subsequently the base frame as used in the method according to the invention can be used as a base for mounting the on-water installation, like an offshore wind turbine, metmast, mooring dolphin, oil and/or gas facility, etcetera. This method according to the invention allows - viewed in a vertical direction - a short jacket structure as the jacket can be supported on piles at a distance above the bed of the water so that expensive parts, like the jacket, of the foundation construction are replaced by relatively cheap parts, like the piles. Further, because the base frame is not only used as support for the on-water installation, but is also used as to assist piling the piles into the bottom, it can be left behind on the piles after having served as assist. Compared with many offshore installation techniques, this reduces building time and simplifies making the foundation considerable, as no temporary part has to be removed from the piles, neither has the jack-up rig to be removed from the foundation structure to allow sufficient access for subsequent installation activities. Building time and making of the foundation structure is also reduced and simplified, respectively, because placing a support structure onto the piles after piling them into the bed can be dispensed with as it is already present. Further, as the piles are passed and piled through the pile passages, the play between the piles and pile passages can be kept very small. Compared with conventional grouted connections, this allows other manners of securing the piles to the base frame, for example by means of swaging or welding. As the base frame is rigidly supported by the jack-up rig, it is firmly secured to the jack-up rig. The jack-up rig thus assures that during piling of the piles into the bed, the base frame is held securely in its position.

With the method according to the invention, the base frame is essentially fully carried - or in other words supported - by the jack-up rig. This can be directly or indirectly via an interposed support frame. 'Essentially fully carried' means that the jack-up rig carries essentially the full weight of the base frame alone or, in case the base frame lies partly or entirely in the water, the jack-up rig together with the water carries essentially the full weight of the base frame.

In this application, the verb 'pile' is used to indicate the action of 'inserting a pile into the soil', wherein in case the soil is a bed of water. The term 'piling' thus encompasses a broad range of piling techniques, like hammer piling (i.e. driving a pile with a ram into the soil), vibration piling, suction piling, rotary drilling piling, and fluid piling (i.e. injecting a liquid in front of the lower end of the pile to fluidize the soil below the pile), etcetera.

In this application, a 'jack-up rig' - or in more general wording a 'self-elevating unit' - is a type of mobile platform that consists of a buoyant hull fitted with a number of movable legs, capable of raising its hull to a position higher than the normal floating position of the hull in the water, such as to a position above the surface of sea. The buoyant hull enables transportation of the unit and all attached machinery to a desired location. Once on location the hull is raised to the required elevation, like an elevation above the sea surface, on its legs supported by the sea bed. The legs of such units may be designed to penetrate the sea bed, may be fitted with enlarged sections or footings, or may be attached to a bottom mat. Although a jack-up rig is in general not self propelled, the jack-up rig according to the invention can be self propelled as well as not self propelled.

According to a further embodiment of the method according to the first aspect of the invention, the pile passages fully enclose a passage through which a pile can pass. Such a passage can for example be ring shaped or tubular shaped.

According to a further embodiment of the method according to the first aspect of the invention, the step of 'rigidly supporting the base frame with the jack-up rig' precedes the step of 'inserting said piles into said pile passages'. This simplifies the transport to the location of the on-water installation as well as manipulation of the piles. The piles can be transported in a horizontal condition lying on the deck of a vessel, like the deck of the jack-up rig. Further, manipulation of the base frame is also simplified because the piles are inserted into the pile passages only when the base frame is in place rigidly supported by the jack-up rig.

According to a further embodiment of the method according to the first aspect of the invention, the base frame is, in the step of 'securing and decoupling of the base frame', decoupled from the jack-up rig after being secured to the piles. Thus first the 'securing' takes place and then the 'decoupling'. This increases the position accuracy of the base frame with respect to the 'fixed world' - which can be considered as represented by the jack-up rig standing on the bed of the water. With respect to 'securing' it is noted that the 'securing' can be a temporary securing, which after the 'decoupling' is replaced by a permanent securing. For example, when grout is used for securing, a hardening time of 12-24 hours or more might be required so that a temporary securing is practical in order to allow the jack-up rig to leave while the hardening takes place or to leave to allow a different cheaper vessel to take care of the grouting operations.

According to a further embodiment of the method according to the first aspect of the invention, the upper side of the base frame is, in the step of 'rigidly supporting the base frame with the jack-up rig', arranged above the surface of the water. In practice the upper side of the base frame will in general be arranged at 5 to 25 meter above the surface of the water.

According to a further embodiment of the method according to the first aspect of the invention, wherein, viewed in vertical direction, the base frame has a height of less than the water depth, the upper side of the base frame is, in the step of 'rigidly supporting the base frame with the jack-up rig', arranged above the surface of the water. This means effectively that the vertical height of the base frame will be smaller than the depth of the water.

According to a further embodiment of the method according to the first aspect of the invention, the base frame is horizontally aligned in the step of 'rigidly supporting the base frame with the jack-up rig'. With 'horizontal alignment' is meant that the - imaginary - top face of the base frame extends horizontal, i.e. parallel to the surface of the water. In this application the horizontal direction is the direction parallel to the surface of the earth or surface of the water and the vertical direction is the direction perpendicular to the surface of the earth or surface of the water. Having the base frame horizontally aligned ensures that the on-water installation to be placed onto the base frame has a horizontal base.

In addition to the previous further embodiment or as an alternative for the previous further embodiment, the base frame can be adjusted for horizontal alignment after having piled the piles into the bed of the water and before securing the base frame to the piles. This can be accomplished by making use of the levelling system of the jack-up rig.

According to a further embodiment of the method according to the first aspect of the invention, wherein the jack-up rig has a hull and movable legs capable of supporting the hull onto a bed of water and raising the hull with respect to the bed of the water; the method further comprising the step of: moving the legs downwards with respect to the hull to contact the bed of the water and to raise the hull with respect to the bed of the water. In general, the hull will be raised over the surface of the water so that the hull comes all the way out of the water. But it is also conceivable that the hull will remain partially in the water.

According to a further embodiment of the method according to the first aspect of the invention, a piler of the type having an anvil is used for piling the piles into the bed of water. This piler can, according to a further embodiment be arranged on the jack-up rig. This allows not only the rigidly supporting of the base frame to be taken care of by the jack-up rig, but also the piling to be done by the jack-up rig. No additional vessel with a piling device is required.

According to a further embodiment of the method according to the first aspect of the invention, the piles are erected from a horizontal position into a vertical position before the step of 'inserting said piles into said pile passages' by means of a pile manipulator which might be arranged on the jack-up rig. This allows the piles to be stored in an horizontal position on the jack-up rig as well as erecting the piles by (the manipulator of) the jack-up rig. No additional vessel with a manipulator is required. However, according to an alternative embodiment, the piles are stored on a feedering vessel supplying the piles. In this case the pile manipulator might be arranged on the jack-up rig, on the feedering vessel or on another vessel.

According to the invention, as defined by claim 1, the piles are piled into the bed of water inclined with respect to the vertical in a manner so that, viewed in a direction from the bed upwards, the piles converge towards each other. This allows obtaining very solid foundation structures having a base frame with, viewed in horizontal direction, smaller dimensions than the horizontal distance between the piles near the bed of the water.

According to a further embodiment of the method according to the first aspect of the invention, the piles are piled into the bed of water inclined with respect to the vertical in a manner so that the piles, viewed in horizontal direction, cross each other between the bed of the water and the base frame. Also this allows obtaining very solid foundation structures having a base frame with, viewed in horizontal direction, smaller dimensions than the horizontal distance between the piles near the bed of the water.

According to a further embodiment of the method according to the first aspect of the invention, the pile passages have a cross section (or internal diameter) which is at most 5%, such as 2% to 3%, larger than the cross section (or external diameter) of the respective piles, which is a tolerance which permits, amongst others, the use of swaging.

According to a further embodiment of the method according to the first aspect of the invention, the securing of the piles to the base frame comprises swaging of the piles inside the pile passages. In doing so a mechanical connection between pile and pile passage is obtained by expanding the pile into an engagement inside the pile passage.

According to a further embodiment of the method according to the first aspect of the invention, each pile passage has a central cross-sectional zones having a cross-section of a first size, which central cross-sectional zone is bounded at its upper side by an upper cross-sectional zone and at its lower side by a lower cross-sectional zone; wherein the cross-section of the lower cross-sectional zone is smaller than the cross-section of the central cross-sectional zone and the cross-section of the upper cross-sectional zone is smaller than the cross-section of the central cross-sectional zone, and wherein the swaging takes place in the central cross-sectional zone.

According to a further embodiment of the method according to the first aspect of the invention, the base frame further comprises inserts; wherein the swaged parts of the piles are each provided with a said insert maintaining the swaged condition and remaining, preferably permanently remaining, in the swaged parts of the piles after decoupling the base frame from the jack-up rig. The inserts will prevent the swaged part of the piles from loosening with respect to the pile passages/base frame.

According to a further embodiment of the method according to the first aspect of the invention, the base frame is rigidly supported by the jack-up rig in a cantilever manner.

According to a further embodiment of the method according to the first aspect of the invention, the dimensions of the cross section of the piles (or the diameter of the piles) varies along the length of the piles. Smaller pile cross sections reduce current and wave loading as well as costs. Smaller pile cross sections are - for example for cost saving purposes - also possible for the parts of the piles which will be piled into the bed of the water.

According to a further embodiment of the method according to the first aspect of the invention, the foundation structure comprises 1 or 2 piles.

According to a second aspect of the invention, the invention relates to a method for building an on-water installation, comprising the steps of:
- applying the method according to the first aspect of the invention;
- placing the on-water installation onto the base frame.

According to a further embodiment of the method according to the second aspect of the invention, the on-water installation is a wind turbine, preferably an offshore wind turbine. It is however noted that both according to the first and second aspect of the invention, the 'on-water installation' can not only be a wind turbine, like an offshore wind turbine, but can also be an installation for oil or gas, a transformer station, a metmast, a mooring dolphin or other installation.

Further aspects of the invention are defined by claims 14 to 16, defining an assembly for forming a foundation structure with the method of the invention.

The present invention will be further illustrated with reference to the enclose drawings, wherein:
Figure 1 shows, in side view, a jack-up rig in a first stage of providing a foundation structure, when sailing to the location where a foundation structure is to be placed;
Figure 2 shows the jack-up rig of figure 1 in top view;
Figure 3 shows, in side view, a jack-up rig in a second stage of providing a foundation structure;
Figure 4 shows, in side view, a jack-up rig in a third stage of providing a foundation structure;
Figure 5 shows, in side view, a jack-up rig in a fourth stage of providing a foundation structure;
Figure 6 shows, in side view, a jack-up rig in a fifth stage of providing a foundation structure;
Figure 7 shows, in side view, a jack-up rig in a sixth stage of providing a foundation structure; and
Figure 8 shows as a detail, in cross section, the rigid connection between a pile and the pile passage/base frame.

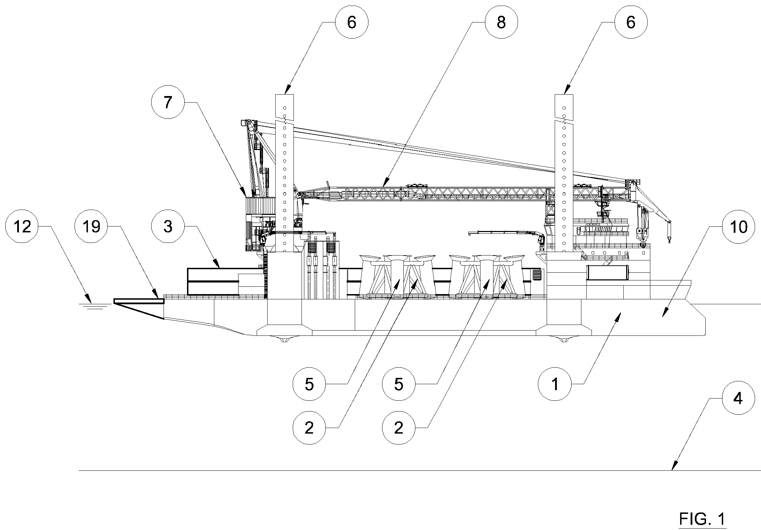

In figures 1-7: reference 1 indicates a jack-up rig, in this case a self-propelled jack-up barge; reference 2 indicates a base frame having an upper side 11; reference 3 indicates a pile; reference 4 indicates a bed of water; reference 5 indicates a pile passage; reference 6 indicate the legs of the jack-up rig 1; reference 7 indicates a manipulator, in this case a crane 7 with a boom 8 and hoisting cables 9; reference 10 indicates the hull of the jack-up rig 1; reference 12 indicates the surface of the water; and reference 18 indicates an on-water installation, in this case a wind-turbine. Other references used will become apparent from the description below.

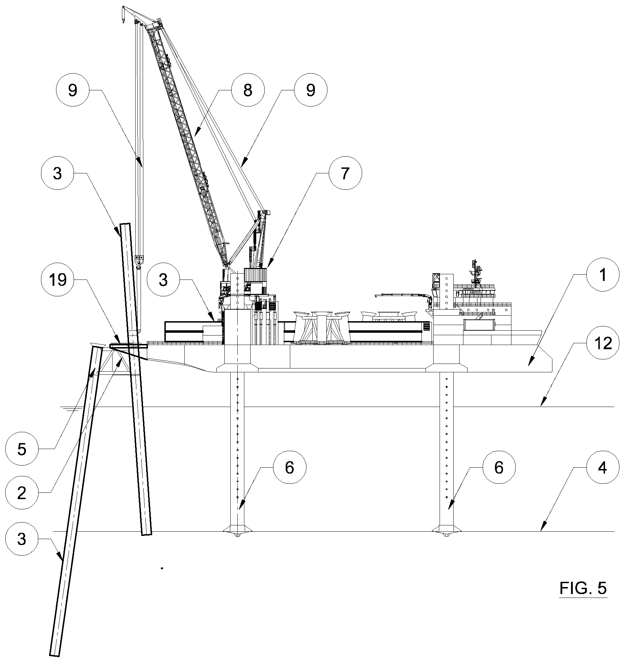

As can be seen in figures 1, 2, 3 and 4 the base frame 2 has pile passages 5. In the shown embodiment the base frame 2 is triangular with a pile passage 5 at each corner. Referring to figures 4 and 5, the pile passages flare at the upper end to facilitate easy insertion of a pile 3 into the pile passage 5. The base frame can however also have another shape.

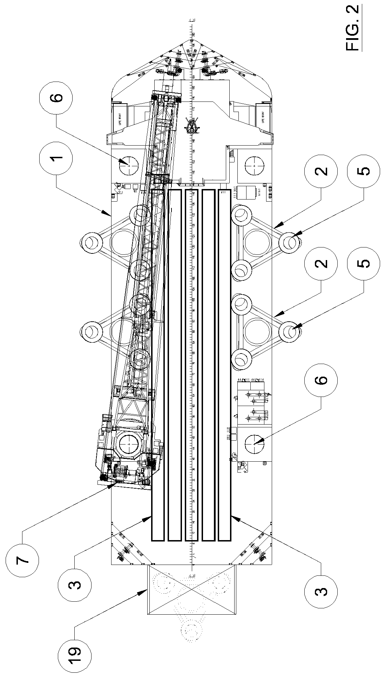

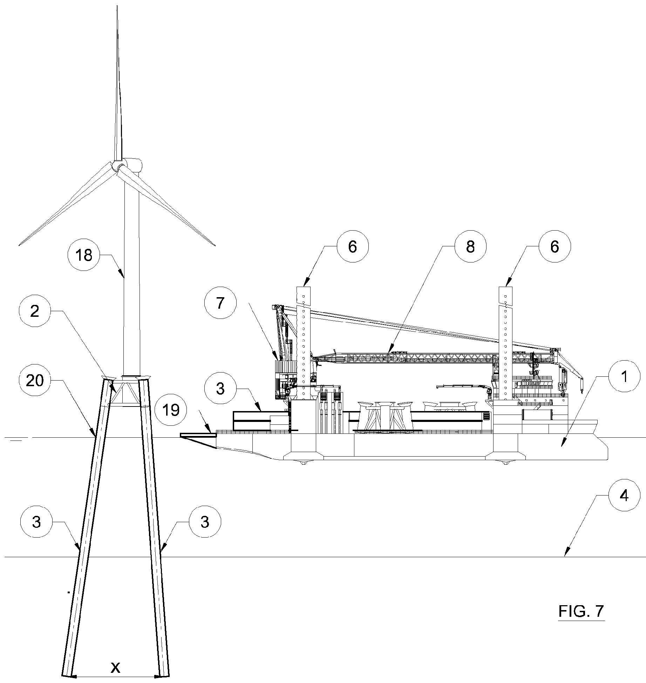

Figures 1 and 2 show a jack-up barge 1 sailing to the location where a foundation structure 20 (see fig 7) for an on-water installation 18 (see also fig 7) is to be made. The jack-up barge is provided with 4 vertical legs 6, which can be lowered from a raised position as shown in figures 1 and 2 to a lowered position as shown in fig 3. The deck of the jack-up barge 1 carries amongst others a stack of piles 3 and four base frames 2. The jack-up barge is further provided with a manipulator 7 for manipulating the piles 3 and/or base frames 2. In this case the manipulator is a crane 7 with a boom 8 and hoisting cables 9. It is however noted that according to the invention the manipulator can also be of another type. Further, it is according to the invention also possible that the manipulator is arranged on another vessel than the jack-up barge 1. At the back side of the jack-up barge 1 there is provided a support frame 19, also called hang-off frame, which optionally can hinge between a vertical storage position (not shown) and a horizontal cantilever position (see fig. 1 and 3). In the embodiment shown the support frame is a fixed outrigger. It is however noted, that the support frame can be of a different type and/or can be located in a different place on the jack-up barge.

The design of the support frame 19 can however also be of a different design. For example, instead of the support frame 19 being a fixed outrigger, the support frame might according to the invention, as a first alternative, also be designed to be extendable from a retracted position - in which it is completely or partly withdrawn with respect to the deck of the barge - to an extended position and vice versa retractable from the extended position to the retracted position. According to the invention, as a second alternative, the support frame might be also designed to be swivable with respect to the jack up barge between a vertical storage position and a horizontal support position for supporting a base frame 2. According to the invention, as a third alternative, the support frame might also be designed to be movable in vertical direction with respect to the jack up barge, which vertical movability in turn might be supplemented by being retractable/extendible according to the first alternative and/or swivable according to the second alternative. In addition it is noted that with all these designs (the fixed out rigger, the first alternative, the second alternative, the third alternative and possible further alternatives), the base frame might be arranged above the support frame, below the support frame or completely or partly embedded in the support frame.

When the jack-up barge 1 has arrived at the location where the foundation structure is to be made, the legs 6 of the jack-up barge are lowered up to contact with the bed 4 of the water. Subsequently the legs 6 are extended further, so that the hull 10 of the jack-up barge is raised to a distance above the surface 12 of the water. This condition of the barge is shown in figure 3. Figure 3 further shows that the support frame 19 is arranged in cantilever manner.

Figure 4 shows a next stage. The crane 7 with boom 8 and hoisting cables 9 - or other type manipulator 7 - has picked up a base frame 2 from the deck of the jack-up barge 1 or from another vessel and by means of the crane 7 this base frame 2 has been brought to the support frame 19 and subsequently it has been arranged on the support frame 19 so that the support frame 19 carries the base frame and the base frame 2 is rigidly supported by the jack-up barge 1. Optionally the base frame 2 can in addition also be secured to the support frame 19 and/or jack-up barge 1. After arranging the base frame 2 on the support frame 19, the manipulator 7 releases the base frame 2 and becomes available for other tasks, as will be discussed further below.

As can be seen in figure 4, the base frame 2 has a vertical height H smaller than the depth D of the water. Referring to figure 4, as well as figures 5-7, it can further be seen that the upper side 11 of the base frame is arranged above the water surface 12. In the embodiment shown in figures 5-7, the entire base frame 2 is in fact arranged above the water surface 12. Part of the base frame 2, or all of the base frame 2, can however also be arranged in the water. Further the level of the water might change over time, for example due to the tides. This might cause that, depending on the momentary water level, the base frame 2 lies partly in the water, deeper in the water or completely above the water.

The top surface 11 of the base frame will in general be aligned to lie in a horizontal plane. For example, this can be accomplished, using an alignment system already present on prior art jack-up barges 1, by just aligning the jack-up barge 1 so that its deck lies in a horizontal plane.

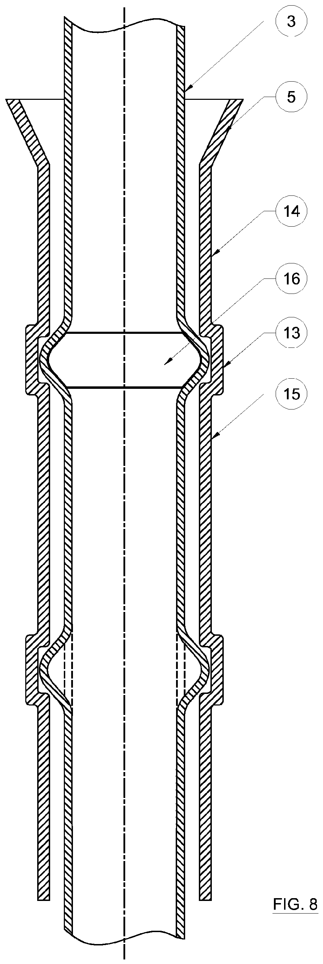

After arranging the base frame 2 on the support frame 19, a pile manipulator 7, which might be the same crane 7 or another manipulator, will pick up a pile 3 from the deck of the jack-up barge 1 or from another vessel. This pile 3 will be erected from a horizontal position into a vertical position. As shown in figure 5, the manipulator 7 lowers the pile 3 to insert it from above in a pile passage 5 of the base frame 2. The insertion of the pile 3 into the pile passage 5 is facilitated by the flaring shape of the upper side of the pile passage 5 (see also fig 8). After insertion of the pile 3 into the pile passage 5, the pile is passed further through the pile passage 5 until its lower end reaches the bed 4 of the water. Subsequently, the pile 3 is piled into the bed 4. As the base frame 2 is rigidly supported by the jack-up barge 1 when piling the pile into the bed 4, the accuracy is increased as this prevents that during this piling the base frame assumes a different position relative to the bed or jack-up barge.

Piling the piles 3 into the bed 4 can be done with any piler known from the prior art. Such a piler (not shown) might be arranged on the jack-up barge 1 as well or on another vessel.

When a pile 3 has been piled sufficiently far into the bed 4, the pile 3 is secured to the base frame. This can be done before the next pile is piled into the bed 4, but can also be done only after all piles are piled into the bed 4. The latter might be preferred as it avoids loosening of the fixation between a pile and its pile passage due to vibrations resulting from piling other piles into the bed.

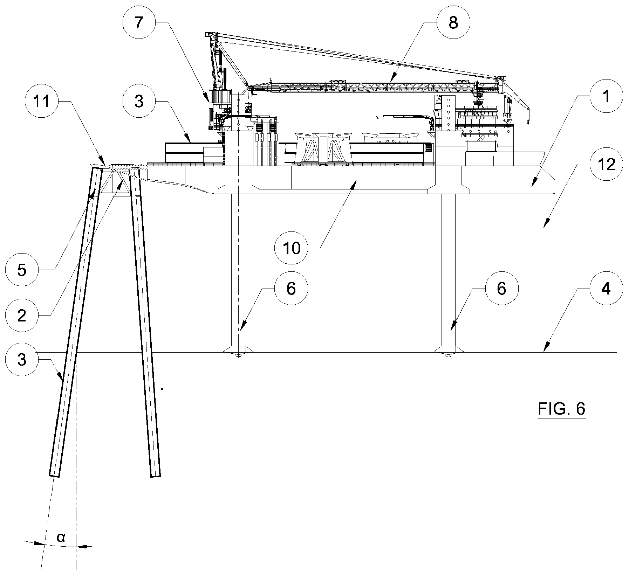

Figure 5 shows, one pile 3 already piled into the bed 4 and another one being inserted into a pile passage 5. Figure 6 shows the base frame 2 with three piles 3 piled into the bed. As indicated by α in figure 6, the piles 3 may slant with respect to the vertical in a manner that, viewed from the bed 4 in upward direction, the piles converge towards each other. This allows the distance X (see figure 7) between the piles 3 at the bed 4 to be for example 25 meters, whilst the horizontal distance between the pile passages might be 6 meters. This results in a foundation structure of high stability without requiring expensive structures (piles are much cheaper than a jacket extending from the bed 4 to above the water surface 12). It is however to be noted that the piles may according to the invention also extend vertically without slanting.

When all the piles are placed, the legs of the jack-up barge 1 are raised, causing the barge 1 to lower and the support frame 19 to decouple from the base frame 2. When the legs 6 of the jack-up barge are sufficiently raised the jack-up barge can sail away, as shown in figure 7, to a next location where a foundation structure is to be placed. There the above described procedure can be repeated. In case the support frame might be designed to be extendible and retractable as discussed earlier as a first alternative, the support frame can be decoupled from the base frame by retracting the support frame. In case the support frame might be designed to be swivable between a vertical and horizontal position as discussed earlier as a second alternative, the support frame can be decoupled from the base frame by folding/swivelling the support frame from the horizontal to the vertical position. In this respect it is noted that the support frame might swivel away in a downward direction or, preferably, in an upward direction. In case the support frame might be designed to be movable in vertical direction as discussed earlier as third alternative, the support frame can be decoupled from the base frame by lowering or raising the support frame with respect to the jack up barge.

As shown very schematically in figure 7, an on-water installation, like a wind turbine 18 can be placed on the foundation structure. This can be done at a later moment with another vessel or with the same rig 1 directly after placing the foundation structure.

Figure 8 shows as a detail a cross section of a pile 3 secured to a pile passage 5 by means of a swaged connection. In this case the pile passage 5 has two swaged connections, a lower one and an upper one. In the lower one, the dashed lines indicate the pile 3 before being swaged. At both swaged connections, the pile passage has a central cross sectional zone 13 and an upper cross sectional zone 14 and lower cross sectional zone 15. As can be seen in figure 8, the central cross sectional zone is wider than the upper and lower cross sectional zones. This allows the pile 3 to engage the pile passage 5 upon local expansion of the pile 3, which is called swaging. In order to prevent the swaged connection from loosening, one can optionally provide an insert 16 inside the swaged region of the pile 3.

## Claims

1. Method for providing a foundation structure for an on-water installation (18), such as an on-water wind turbine, for example an offshore wind turbine,
wherein the foundation structure comprises:
• a base frame (2) for supporting the on-water installation;
• at least two piles (3), such as at least three piles (3), each with a lower part and an upper part, the lower parts of the piles (3) being secured to a bed (4) of a water and the upper parts of the piles (3) being secured to the base frame (2);
wherein the base frame (2) comprises a pile passage (5) for each said pile (3);
wherein the method comprises the steps of:
• rigidly supporting the base frame (2) with a jack-up rig (1) which is supported on said bed (4) of water;
• inserting said piles (3) into said pile passages (5);
• piling said piles (3) into the bed (4) of the water whilst:
∘ the piles (3) extend through the pile passages (5); and
∘ the base frame (2) is rigidly supported by the jack-up rig (1);
∘ wherein a piling method is used for said piling, which piling method is preferably chosen from the group comprising one or more of hammer piling, vibration piling, suction piling, rotary drilling piling or fluid piling;
• after said piles (3) having been piled into the bed (4) of water, securing the base frame (2) to the piles (3) and decoupling the base frame (2) from the jack-up rig (1),
• **characterized in that** the piles (3) are piled into the bed (4) inclined (α) with respect to the vertical in a manner so that, viewed in a direction from the bed (4) upwards, the piles (3) converge towards each other.

2. Method according to claim 1, wherein the pile passages fully enclose a passage through which a pile can pass, the pile passages preferably being ring shaped or tubular shaped and/or wherein the pile passages (5) have a cross section which is at most 5%, such as in the range of 2% to 3%, larger than the cross section of the respective piles (3).

3. Method according to one of claims 1-2, wherein the step of 'rigidly supporting the base frame (2) with the jack-up rig (1)' precedes the step of 'inserting said piles (3) into said pile passages (5)', and/or, in the step of 'securing and decoupling of the base frame (2)', the base frame (2) is decoupled from the jack-up rig (1) after being secured to the piles (3).

4. Method according to one of claims 1-3, wherein, in the step of 'rigidly supporting the base frame (2) with the jack-up rig (1)', the upper side (11) of the base frame (2) is arranged above the surface (12) of the water and/or wherein, when viewed in vertical direction, the base frame has a height of less than the water depth, and the upper side of the base frame is, in the step of 'rigidly supporting the base frame with the jack-up rig', arranged above the surface of the water.

5. Method according to one of claims 1-4, wherein, in the step of 'rigidly supporting the base frame (2) with the jack-up rig (1)', the base frame (2) is rigidly supported by the jack-up rig (1) in a cantilever manner, the base frame (2) is horizontally aligned, and/or wherein the base frame is adjusted for horizontal alignment after having piled the piles into the bed of the water and before securing the base frame to the piles.

6. Method according to one of claims 1-5, wherein the jack-up rig (1) has a hull (10) and movable legs (6) capable of supporting the hull (10) onto a bed (4) of water and raising the hull (10) with respect to the bed (4) of the water; further comprising the step of:
• moving the legs (6) downwards with respect to the hull (10) to contact the bed (4) of the water and to raise the hull (10).

7. Method according to one of claims 1-6, wherein the piles (3) are erected from a horizontal position into a vertical position before the step of 'inserting said piles (3) into said pile passages (5)' by means of a pile manipulator (7), such as a pile manipulator (7) arranged on the jack-up rig (1), and/or wherein the piler is provided on the jack-up rig (1).

8. Method according to one of claims 1-7, wherein the piles are piled into the bed of water inclined with respect to the vertical in a manner so that the piles cross each other between the bed of the water and the base frame.

9. Method according to one of claims 1-8, wherein the securing of the piles (3) to the base frame (2) comprises swaging of the piles (3) inside the pile passages (5), and wherein in particular each pile passage has a central cross-sectional zone (13) having a cross-section of a first size, which central cross-sectional zone (13) is bounded at its upper side by an upper cross-sectional zone (14) and at its lower side by a lower cross-sectional zone (15), wherein the cross-section of the lower cross-sectional zone (15) is smaller than the cross- section of the central cross-sectional zone (13) and the he cross-section of the upper cross- sectional zone (14) is smaller than the cross-section of the central cross-sectional zone (13), and the swaging takes place in the central cross-sectional zone (13).

10. Method according to claim 9, wherein the swaged parts of the piles (3) are each provided with an insert (16) maintaining the swaged condition and remaining, preferably permanently remaining, in the swaged parts of the piles (3) after decoupling the base frame (2) from the jack-up rig (1).

11. Method according to one of claims 1-10, wherein the dimensions of the cross section of the piles varies along the length of the piles.

12. Method for building an on-water installation, comprising the steps of:
• applying the method according to one of claims 1-11 for providing a foundation structure for the on-water installation (18);
• placing the on-water installation onto the base frame (2).

13. Method according to claim 12, wherein the on-water installation (18) is a wind turbine, preferably an offshore wind turbine.

14. Assembly for forming a foundation structure with the method according to one of claims 1-13, comprising:
• a base frame (2) for supporting the on-water installation;
• at least two piles (3), such as at least three piles (3), each with a lower part and an upper part, the lower parts of the piles (3) for being secured to a bed (4) of a water and the upper parts of the piles (3) for being secured to the base frame (2);
• a jack-up barge;
**characterized in that**
the base frame (2) comprises a pile passage (5) for each said pile (3) being inclined with respect to the base frame (2) when the base frame (2) is held horizontally, and **in that** the jack-up barge and the base frame are configured such that the base frame is decouplably rigidly supportable by the jack-up barge such that, when the base frame is rigidly supported by the jack-up barge with the jack-up rig (1) supported on said bed (4) of water, said piles can be inserted into said pile passages and be piled into the bed (4) inclined (α) with respect to the vertical in a manner so that, viewed in a direction from the bed (4) upwards, the piles (3) converge towards each other and possibly cross each other between the bed of the water and the base frame and after said piles (3) having been piled into the bed (4) of water, the base frame (2) is securable to the piles (3), preferably by swaging.

15. Assembly according to claim 14, wherein the pile passages fully enclose a passage through which a pile can pass, the pile passages preferably being ring shaped or tubular shaped and/or wherein the pile passages (5) have a cross section which is at most 5%, such as in the range of 2% to 3%, larger than the cross section of the respective piles (3).

16. Assembly for building an on-water installation, such as an on-water wind turbine, for example an offshore wind turbine, comprising the assembly according to one of claims 14-15.

## Patentansprüche

1. Verfahren zur Bereitstellung einer Fundamentstruktur für eine Anlage (18) auf Wasser, wie etwa eine Windturbine auf Wasser, zum Beispiel eine Offshore Windturbine,
wobei die Fundamentstruktur aufweist:
- einen Grundrahmen (2) zum Halten der Anlage auf Wasser:
- wenigstens zwei Pfähle (3), wie etwa wenigstens drei Pfähle (3), jeder mit einem unteren Teil und einem oberen Teil, wobei die unteren Teile der Pfähle (3) an einem Wasserbett (4) befestigt sind und die oberen Teile der Pfähle (3) an dem Grundrahmen (2) befestigt sind;
wobei der Grundrahmen (2) einen Pfahldurchgang (5) für jeden Pfahl (3) aufweist, wobei das Verfahren die folgenden Schritte aufweist:
- starres Halten des Grundrahmens (2) mit einer Hubinsel (1), die auf dem besagten Wasserbett (4) gehalten wird;
- Einsetzen der besagten Pfähle (3) in die besagten Pfahldurchgänge (5);
- Rammen der Pfähle (3) in das Wasserbett (4), während
- die Pfähle (3) sich durch die Pfahldurchgänge (5) erstrecken; und
- der Grundrahmen (2) von der Hubinsel (1) starr gehalten wird;
- wobei ein Rammverfahren für das besagte Rammen verwendet wird, wobei das Rammverfahren vorzugsweise aus der Gruppe ausgewählt wird, die eines oder mehrere der Folgenden aufweist: Hammerrammen, Vibrationsrammen, Saugrammen, Drehbohrrammen oder Fluidrammen;
- nachdem die besagten Pfähle (3) in das Wasserbett (4) gerammt wurden, Befestigen des Grundrahmens (2) an den Pfählen (3) und Entkoppeln des Grundrahmens (2) von der Hubinsel (1),
- **dadurch gekennzeichnet, dass**
die Pfähle (3) in Bezug auf die Vertikale geneigt (α) derart in das Bett (4) gerammt werden, dass die Pfähle (3) in einer Richtung von dem Bett (4) nach oben gesehen, aufeinander zu konvergieren.

2. Verfahren nach Anspruch 1, wobei die Pfahldurchgänge einen Durchgang, durch den ein Pfahl gehen kann, vollständig umschließen, wobei die Pfahldurchgänge vorzugsweise ringförmig oder rohrförmig sind, und/oder wobei die Pfahldurchgänge (5) einen Querschnitt haben, der höchstens 5%, wie etwa im Bereich von 2% bis 3%, größer als der Querschnitt der jeweiligen Pfähle (3) ist.

3. Verfahren nach einem der Ansprüche 1 - 2, wobei der Schritt des "starren Haltens des Grundrahmens (2) mit der Hubinsel (1)" dem Schritt des "Einsetzens der Pfähle (3) in die Pfahldurchgänge (5)" vorausgeht, und/oder der Grundrahmen (2) in dem Schritt des "Befestigens und Entkoppelns des Grundrahmens (2)" von der Hubinsel (1) entkoppelt wird, nachdem er an den Pfählen (3) befestigt worden ist.

4. Verfahren nach einem der Ansprüche 1 - 3, wobei in dem Schritt des "starren Haltens des Grundrahmens (2) mit der Hubinsel (1)" die Oberseite (11) des Grundrahmens (2) oberhalb der Wasseroberfläche (12) angeordnet ist, und/oder wobei der Grundrahmen, in der Vertikalrichtung gesehen, eine Höhe von weniger als die Wassertiefe hat und die Oberseite des Grundrahmen in dem Schritt des, starren Haltens des Grundrahmens mit der Hubinsel' oberhalb der Wasseroberfläche angeordnet ist.

5. Verfahren nach einem der Ansprüche 1 - 4, wobei in dem Schritt des "starren Haltens des Grundrahmens (2) mit der Hubinsel (1)" der Grundrahmen (2) von der Hubinsel (1) ein einer auskragenden Weise starr gehalten wird, der Grundrahmen (2) horizontal ausgerichtet ist und/oder wobei der Grundrahmen für die horizontale Ausrichtung eingestellt wird, nachdem die Pfähle in das Wasserbett gerammt wurden und bevor der Grundrahmen an den Pfählen befestigt wird.

6. Verfahren nach einem der Ansprüche 1 - 5, wobei die Hubinsel (1) einen Rumpf (10) und bewegliche Beine (6) hat, die fähig sind, den Rumpf (10) auf einem Wasserbett (4) zu halten und den Rumpf (10) in Bezug auf das Wasserbett (4) anzuheben; das ferner den folgenden Schritt aufweist:
- Bewegen der Beine (6) in Bezug auf den Rumpf (10) nach unten, um das Wasserbett (4) zu berühren und den Rumpf (10) anzuheben.

7. Verfahren nach einem der Ansprüche 1 - 6, wobei die Pfähle (3) vor dem Schritt des, Einsetzens der besagten Pfähle (3) in die besagten Pfahldurchgänge (5) aus einer horizontalen Position in eine vertikale Position mittels eines Pfahlmanipulators (7), wie etwa eines auf der Hubinsel (1) angeordneten Pfahlmanipulators und/oder wobei der Pfahlaufsteller auf der Hubinsel (1) vorgesehen ist, aufgerichtet werden.

8. Verfahren nach einem der Ansprüche 1 - 7, wobei die Pfähle in Bezug auf die Vertikale derart geneigt in das Wasserbett gerammt werden, dass die Pfähle einander zwischen dem Wasserbett und dem Grundrahmen kreuzen.

9. Verfahren nach einem der Ansprüche 1 - 8, wobei das Befestigen der Pfähle (3) an dem Grundrahmen (2) das Umformen der Pfähle (3) ins Innere der Pfahldurchgänge (5) aufweist, und wobei insbesondere jeder Pfahldurchgang eine zentrale Querschnittzone (13) mit einem Querschnitt einer ersten Größe hat, wobei die zentrale Querschnittzone (13) an ihrer Oberseite durch eine obere Querschnittzone (14) und an ihrer Unterseite durch eine untere Querschnittzone (15) begrenzt wird, wobei der Querschnitt der unteren Querschnittzone (15) kleiner als der Querschnitt der zentralen Querschnittzone (13) ist und der Querschnitt der oberen Querschnittzone (14) kleiner als der Querschnitt der zentralen Querschnittzone (13) ist, und das Umformen in der zentralen Querschnittzone (13) stattfindet.

10. Verfahren nach Anspruch 9, wobei die gesenkgedrückten Teile der Pfähle (3) jeweils mit einem Einsatz (16) versehen sind, der den umgeformten Zustand aufrecht erhält, der, vorzugsweise dauerhaft, in den gesenkgedrückten Teilen der Pfähle (3) verbleibt, nachdem der Grundrahmen (2) von der Hubinsel (1) entkoppelt wurde.

11. Verfahren nach einem der Ansprüche 1 - 10, wobei sich die Abmessungen des Querschnitts der Pfähle entlang der Länge der Pfähle ändern.

12. Verfahren zum Aufbauen einer Anlage auf Wasser, das die folgenden Schritte aufweist:
- Anwenden des Verfahrens nach einem der Ansprüche 1 - 11 zur Bereitstellung einer Fundamentstruktur für eine Anlage (18) auf Wasser;
- Anordnen der Anlage auf Wasser auf dem Grundrahmen (2).

13. Verfahren nach Anspruch 12, wobei die Anordnung (18) auf Wasser eine Windturbine, vorzugsweise eine Offshore Windturbine, ist.

14. Anordnung zur Ausbildung einer Fundamentstruktur mit dem Verfahren nach einem der Ansprüche 1 - 13, die aufweist:
- einen Grundrahmen (2) zum Halten der Anlage auf Wasser:
- wenigstens zwei Pfähle (3), wie etwa wenigstens drei Pfähle (3), jeder mit einem unteren Teil und einem oberen Teil, wobei die unteren Teile der Pfähle (3) zur Befestigung an einem Wasserbett (4) und die oberen Teile der Pfähle (3) zur Befestigung an dem Grundrahmen (2) dienen;
- einen Hebekahn;
**dadurch gekennzeichnet, dass**
der Grundrahmen (2) einen Pfahldurchgang (5) für jeden Pfahl (3) aufweist, der in Bezug auf den Grundrahmen (2) geneigt ist, wenn der Grundrahmen (2) horizontal gehalten wird, und dass der Hebekahn und der Grundrahmen derart ausgebildet sind, dass der Grundrahmen entkoppelbar starr auf dem Hebekahn haltbar ist, so dass, wenn der Grundrahmen von dem Hebekahn starr gehalten wird, wobei die Hubinsel (1) auf dem besagten Wasserbett (4) gehalten wird, die besagten Pfähle in die besagten Pfahldurchgänge eingesetzt und in Bezug auf die Vertikale geneigt (α) derart in das Bett (4) gerammt werden können, dass die Pfähle (3), in einer Richtung von dem Bett (4) nach oben gesehen, aufeinander zu konvergieren und sich möglicherweise zwischen dem Wasserbett und dem Grundrahmen kreuzen, und der Grundrahmen, nachdem die besagten Pfähle (3) in das Wasserbett (4) gerammt wurden, vorzugsweise durch Umformen, an den Pfählen (3) befestigbar ist.

15. Anordnung nach Anspruch 14, wobei die Pfahldurchgänge einen Durchgang, durch den ein Pfahl gehen kann, vollständig umschließen, wobei die Pfahldurchgänge vorzugsweise ringförmig oder rohrförmig sind, und/oder wobei die Pfahldurchgänge einen Querschnitt haben, der höchstens 5%, wie etwa im Bereich von 2% bis 3%, größer als der Querschnitt der jeweiligen Pfähle (3) ist.

16. Anordnung zum Aufbauen einer Anlage auf Wasser, wie etwa einer Windturbine auf Wasser, zum Beispiel einer Offshore Windturbine, die die Anordnung nach einem der Ansprüche 14 - 15 aufweist.

## Revendications

1. Procédé pour fournir une structure de fondation pour une installation en mer (18), telle qu'une éolienne en mer, par exemple une éolienne offshore,
dans lequel la structure de fondation comprend :
un bâti de base (2) pour supporter l'installation en mer ;
au moins deux piles (3), telles qu'au moins trois piles (3), chacune avec une partie inférieure et une partie supérieure, les parties inférieures des piles (3) étant fixées à un lit (4) et les parties supérieures des piles (3) étant fixée au bâti de base (2) ;
dans lequel le bâti de base (2) comprend un passage de pile (5) pour chacune desdites piles (3) ;
dans lequel le procédé comprend les étapes consistant à :
supporter de manière rigide le bâti de base (2) avec une plateforme auto-élévatrice (1) qui est supportée sur ledit lit (4) ;
insérer lesdites piles (3) dans lesdits passages de pile (5) ;
enfoncer lesdites piles (3) dans le lit (4) alors que :
les piles (3) s'étendent à travers les passages de piles (5) ; et
le bâti de base (2) est rigidement supporté par la plateforme auto-élévatrice (1) ;
dans lequel un procédé d'enfoncement de pile est utilisé pour ledit enfoncement de pile, lequel procédé d'enfoncement de pile est de préférence choisi dans le groupe comprenant un ou plusieurs parmi l'enfoncement de pile au marteau, l'enfoncement de pile par vibrations, l'enfoncement de pile par aspiration, l'enfoncement de pile par forage rotatif ou l'enfoncement de pile par fluide ;
après que lesdites piles (3) ont été enfoncées dans le lit (4), fixer le bâti de base (2) aux piles (3) et découpler le bâti de base (2) de la plateforme auto-élévatrice (1),
**caractérisé en ce que** :
les piles (3) sont enfoncées dans le lit (4) inclinées (α) par rapport à la verticale de sorte que, observées dans une direction à partir du lit (4) vers le haut, les piles (3) convergent les unes vers les autres.

2. Procédé selon la revendication 1, dans lequel les passages de pile enferment complètement un passage par lequel une pile peut passer, les passages de pile étant de préférence de forme annulaire ou de forme tubulaire et/ou dans lequel les passages de pile (5) ont une section transversale qui est au maximum 5 %, telle que dans la plage de 2 % à 3 %, supérieure à la section transversale des piles (3) respectives.

3. Procédé selon l'une des revendications 1 à 2, dans lequel l'étape consistant à supporter de manière rigide le bâti de base (2) avec la plateforme auto-élévatrice (1) précède l'étape consistant à insérer lesdites piles (3) dans lesdits passages de pile (5), et/ou, à l'étape consistant à fixer et découpler le bâti de base (2), le bâti de base (2) est découplé de la plateforme auto-élévatrice (1) après avoir été fixé aux piles (3).

4. Procédé selon l'une des revendications 1 à 3, dans lequel à l'étape consistant à supporter de manière rigide le bâti de base (2) avec la plateforme auto-élévatrice (1), le côté supérieur (11) du bâti de base (2) est agencé au-dessus de la surface (12) de l'eau et/ou dans lequel, lorsqu'il est observé dans la direction verticale, le bâti de base a une hauteur inférieure à la profondeur de l'eau, et le côté supérieur du bâti de base est, à l'étape consistant à supporter de manière rigide le bâti de base avec la plateforme auto-élévatrice, agencé au-dessus de la surface de l'eau.

5. Procédé selon l'une des revendications 1 à 4, dans lequel, à l'étape consistant à supporter de manière rigide le bâti de base (2) avec la plateforme auto-élévatrice (1), le bâti de base (2) est supporté de manière rigide par la plateforme auto-élévatrice (1) en porte-à-faux, le bâti de base (2) est horizontalement aligné et/ou dans lequel le bâti de base est ajusté pour l'alignement horizontal après avoir enfoncé les piles dans le lit et avant d'avoir fixé le bâti de base aux piles.

6. Procédé selon l'une des revendications 1 à 5, dans lequel la plateforme auto-élévatrice (1) a une coque (10) et des pieds mobiles (6) capables de supporter la coque (10) sur un lit (4) et de lever la coque (10) par rapport au lit (4), comprenant en outre l'étape consistant à :
faire descendre les pieds (6) par rapport à la coque (10) pour entrer en contact avec le lit (4) et lever la coque (10).

7. Procédé selon l'une des revendications 1 à 6, dans lequel les piles (3) sont érigées d'une position horizontale dans une position verticale avant l'étape consistant à insérer lesdites piles (3) dans lesdits passages de pile (5) au moyen d'un manipulateur de pile (7), tel qu'un manipulateur de pile (7) agencé sur la plateforme auto-élévatrice (1), et/ou dans lequel le dispositif d'enfoncement de pile est prévu sur la plateforme auto-élévatrice (1).

8. Procédé selon l'une des revendications 1 à 7, dans lequel les piles sont enfoncées dans le lit inclinées par rapport à la verticale de sorte que les piles se croisent entre le lit et le bâti de base.

9. Procédé selon l'une des revendications 1 à 8, dans lequel l'étape consistant à fixer les piles (3) au bâti de base (2) comprend l'étape consistant à marteler les piles (3) à l'intérieur des passages de pile (5), et dans lequel, en particulier, chaque passage de pile à une zone transversale centrale (13) ayant une section transversale d'une première taille, laquelle zone transversale centrale (13) est délimitée au niveau de son côté supérieur, par une zone transversale supérieure (14) et au niveau de son côté inférieur, par une zone transversale inférieure (15) dans lequel la section transversale de la zone transversale inférieure (15) est inférieure à la section transversale de la zone transversale centrale (13) et la section transversale de la zone transversale supérieure (14) est inférieure à la section transversale de la zone transversale centrale (13) et le martelage a lieu dans la zone transversale centrale (13).

10. Procédé selon la revendication 9, dans lequel les parties martelées des piles (3) sont chacune prévues avec un insert (16) maintenant la condition martelée et restant, de préférence restant de manière permanente, dans les parties martelées de pile (3) après avoir découplé le bâti de base (2) de la plateforme auto-élévatrice (1).

11. Procédé selon l'une des revendications 1 à 10, dans lequel les dimensions de la section transversale des piles varie le long de la longueur des piles.

12. Procédé pour construire une installation en mer, comprenant les étapes consistant à :
appliquer le procédé selon l'une des revendications 1 à 11 pour fournir une structure de fondation pour l'installation en mer (18) ;
placer l'installation en mer sur le bâti de base (2).

13. Procédé selon la revendication 12, dans lequel l'installation en mer (18) est une éolienne, de préférence une éolienne offshore.

14. Ensemble pour former une structure de fondation avec le procédé selon l'une des revendications 1 à 13, comprenant :
un bâti de base (2) pour supporter l'installation en mer ;
au moins deux piles (3), telles qu'au moins trois piles (3), chacune avec une partie inférieure et une partie supérieure, les parties inférieures des piles (3) étant prévues pour être fixées à un lit (4) et les parties supérieures des piles (3) étant prévues pour être fixées au bâti de base (2) ;
une barge auto-élévatrice ;
**caractérisé en ce que** :
le bâti de base (2) comprend un passage de pile (5) pour chacune desdites piles (3) qui est inclinée par rapport au bâti de base (2) lorsque le bâti de base (2) est maintenu horizontalement, et **en ce que** :
la barge auto-élévatrice et le bâti de base sont configurés de sorte que le bâti de base peut être rigidement supporté de manière à pouvoir être découplé par la barge auto-élévatrice de sorte que, lorsque le bâti de base est rigidement supporté par la barge auto-élévatrice avec la plateforme auto-élévatrice (1) supportée sur ledit lit (4), lesdites piles peuvent être insérées dans lesdits passages de pile et être enfoncées dans le lit (4) inclinées (α) par rapport à la verticale de sorte que, observées dans une direction à partir du lit (4) vers le haut, les piles (3) convergent les unes vers les autres et éventuellement se croisent entre le lit et le bâti de base et après que lesdites piles (3) ont été enfoncées dans le lit (4), le bâti de base (2) peut être fixé sur les piles (3), de préférence par martelage.

15. Ensemble selon la revendication 14, dans lequel les passages de pile enferment complètement un passage par lequel une pile peut passer, les passages de pile étant de préférence de forme annulaire ou de forme tubulaire et/ou dans lequel les passages de pile (5) ont une section transversale qui est au maximum 5 %, telle que dans la plage de 2 % à 3 %, supérieure à la section transversale des piles (3) respectives.

16. Ensemble pour construire une installation en mer, telle qu'une éolienne en mer, par exemple une éolienne offshore, comprenant l'ensemble selon l'une des revendications 14 à 15.
